# EUROPEAN PATENT SPECIFICATION

(11) **EP 2 724 024 B1**
(45) Date of publication and mention of the grant of the patent: **21.06.2017**
(21) Application number: 12746405.5
(22) Date of filing: 04.06.2012
(51) Int. Cl.: F04B 15/00, F04B 53/16, F16J 1/02

(54) **HIGH PRESSURE PISTON PUMP**
HOCHDRUCKKOLBENPUMPE
POMPE À PISTON HAUTE PRESSION

(30) Priority: 27.06.2011 SI 201100225
(43) Date of publication of application: 30.04.2014
(73) Proprietor: Tajfun Planina Proizvodnja Strojev, D.o.o., 3225 Planina Pri Sevnici (SI)
(72) Inventor: MAJDIC, Franc, 1251 Moravce (SI); MOHORIC, Damir, 5280 Idrija (SI); SPAN, Iztok, 1000 Ljubljana (SI); PEZDIRNIK, Jozef, 4281 Mojstrana (SI)
(74) Representative: Borstar, Dusan
(86) International application number: PCT/SI2012/000035
(87) International publication number: WO 2013/002739

(56) References cited:
- EP-A1- 0 087 131
- DE-A1- 10 039 169
- US-A- 4 285 642
- US-A- 4 559 786

## Description

The invention belongs to mechanical engineering, namely to piston oscillating machines and pumps as well as to components thereof.

The purpose of the invention is to create a piston pump for generating pressure in each hydraulic circuit, in which water could be used as hydraulic liquid, which could optionally and depending on each operating conditions be mixed with environment-friendly anti-freezing additives, and in which the pressure of min. 50 to at least approx. 250 bar should be available.

A state of the art pump is known to those skilled in the art, which is described in SI 22324 A and is used for driving and controlling of hydraulic cylinders. Such pump comprises a cylindrical operating chamber, in which the piston is inserted, which is able to oscillate to and fro in the axial direction and is pivotally interconnnected with a crank, which is pivotally linked to an eccentric, which is driven by means of appropriate driving means and the central axis of which is aligned with the central axis of said cylinder. Said operating chamber is hydraulically interconnected on the one hand with a supplying conduit and on the other hand with a discharging i.e. compression conduit, wherein each conduit is furnished with a non-return valve, which is arranged adjacent to the operation chamber inlet or outlet respectively. When the piston is moving in its first direction, vacuum occurs within the operating chamber or the cylinder, and the hydraulic liquid starts flowing from the reservoir into the operation chamber. When the piston is moving in the opposite direction, compression occurs within the operation chamber, due which the non-return valve of the supplying conduit is closed and after that the non-return valve in the discharging conduit opens, so that compressed hydraulic liquid is discharged into said compression conduit and can be correspondingly transferred to each users which are included in the hydraulic circuit.

In practice, such pump is able to operate as a high pressure pump, by which said users are supplied with compressed hydraulic liquid, in which the pressure reaches 50 to at least 25 bar. Hydraulic oil is used as the liquid, the kinematic viscosity of which usually varies depending on temperature, although by correctly dimensioning of components such variations may still be acceptable, and each mutually contacting and cooperating surfaces of the cylinder and the piston are satisfactory lubricated even in the case, when the transversal forces, namely forces which act transversally to a direction of displacing the piston and result from oscillating of the eccentrically hinged and to the piston linked crank, are relatively high.

Said temperature variations are not just a consequence of temperature variations in the surrounding air, but merely result from the heat which is generated during operation of the hydraulic circuit due to compression of the hydraulic media and due to resistance during circulation of the hydraulic media throughout the hydraulic circuit and different parts thereof, wherein due to properties of the oil as such in practice said heat is difficultly transferred away in a fluent and efficient manner.

Consequently, heating or even overheating of components in hydraulic circuits occur in the practice, which practically always results in certain risk of damages. Besides, numerous appliances with integrated hydraulic circuits are foreseen to operate in situ and in natural environment, in which every leakage, dropping or discharge of the hydraulic oil leads to undesired environment pollution. In order to avoid such problems, the use of environment-polluting hydraulic liquids and risks related thereto, should preferably be excluded.

A piston pump is disclosed in US 4,285,642 A and comprises a base plate, a cylinder which is pivotally attached to said base plate, and a piston, which is inserted within said cylinder and is moreover driven by means of a crank shaft mechanism attached to a motor, which is also mounted on said base plate. Such pump is suitable for retrieving samples of gaseous products without contamination, generally for pumping fluids, when small pressures need to be developed. In order to reduce the wear, said cylinder and piston are constructed of plastic or plastic-like material with low friction coefficient, e.g. of polytetrafluorethylene. The piston is relatively rigid and is sealed by means of O-rings consisting of flexible material rubber. The wear is further reduced by means of pivotally attaching the cylinder to said base plate. Consequently, when the piston is moved to and fro along the cylinder, transversal forces of the piston generated by the crank shaft mechanism towards the internal wall of the cylinder are reduced by means of pivoting the cylinder relative to the base plate. Consequently, in addition to oscillations generated by the crank shaft mechanism along the cylinder, additional oscillations in quite another direction are generated by means of freely pivoting the cylinder. By using such pump for developing high pressure of each fluid, such oscillating could generate enormous dynamic forces and vibrations together with a plurality of secondary effects like energy loses, overheating, wear and bulky construction of the hydraulic assembly as such.

Still further piston pumps comprising a cylinder consisting of plastics or plastic-like material, e.g. polytetrafluorethylene, and a piston consisting of steel like thermally treated martensitic stainless still, are described in US 4,559,786 A, EP 0 087 131 A and DE 100 39 169 A.

The present invention refers to a high pressure piston pump, in particular for generating each desired pressure of a hydraulic liquid within each disposable high pressure hydraulic circuit in amounts between 50 and at least 250 bar, wherein such pump comprises a cylindrical operating chamber, in which a piston is inserted in a sealed manner and by maintaining a pre-determined gap towards the wall of said operating chamber and with the possibility of oscillating to and fro in the axial direction, for the purposes of which it is pivotally interconnected with a crank, which is pivotally attached to an eccentric, which is driven by appropriate driving means, wherein said operating chamber is hydraulically interconnected on the one hand with a supplying conduit and on the other hand with a discharging i.e. compression conduit, and wherein each of said conduits is furnished with a non-return valve located in the area of supplying the hydraulic liquid into said operating chamber or discharging thereof, and wherein the non-return valve of the supplying conduit is intended to allow the hydraulic liquid to flow from said supplying conduit towards the operating chamber but not also in the opposition direction, and wherein the non-return valve of the discharging conduit is intended to allow the hydraulic liquid to flow outwards from the operating chamber into the discharging conduit but not also in the opposite direction.

The invention provides that water is used as a hydraulic liquid, as well as that on the one hand at least an arca of the internal wall of said cylindrical operating chamber, which is intended for cooperation with the external surface of the piston and is therefore at least temporarily brought into a direct contact therewith, consists of polyether-ether-ketone (PEEK), and on the other hand, at least an area of the external surface of the piston, which is intended for cooperation with said internal wall of the operating chamber and is during oscillations of the piston at least temporarily brought in contact with said internal wall of the operating chamber, consists of martensitic stainless steel. According to the invention, a driving eccentric of a crank, which is intended for providing oscillating movement of the piston to and fro along said operating chamber, is located at a pre-determined distance transversally offset with regard to the longitudinal central axis of said operation chamber, so that at least during the critical stage of movement of the piston i.e. during compression of the hydraulic liquid, the crank extends at least approximately along said longitudinal central axis of said operation chamber.

Said PEEK is preferably a PEEK containing 30% carbon fibers. In a preferred embodiment, the operating chamber is surrounded with a bush, which consists of PEEK and within which a piston is inserted, which consists of a martensitic stainless steel.

Said martensitic stainless steel is preferably a steel AISI 440B (DIN X 90CrMoV18). The piston consists of a martensitic stainless steel, which is preferably thermal treated, namely quenched and annealed, and optionally also furnished with a hard-chrome layer on its external surface.

Water as hydraulic liquid is optionally mixed with anti-freezing additive, which is selected from the group consisting of ethanol and ethylene glycol.

When the piston is moving in its first direction, vacuum is generated within the operation chamber of the cylinder, which leads to closing the non-return valve in the compression conduit and opening the non-return valve in the supplying conduit, so that each hydraulic liquid stars flowing from a reservoir into a cylinder. When subsequently the piston is moved in the opposite direction, compression occurs within the operating chamber, by which the non-return valve of the supplying conduit is closed, and the non-return valve of the discharging conduit is open, so that compressed hydraulic liquid flows through said discharging conduit towards each disposable users which are integrated in each hydraulic circuit.

The invention is described in connection with two piston pumps, which are shown in the attached drawing, wherein
- Fig. 1: is a schematically presented high-pressure piston pump according to the state of the art, in which hydraulic oil is used as a hydraulic liquid; and
- Fig. 2: is also a schematically presented high-pressure piston pump according to the invention, in which pure water is used as a hydraulic liquid.

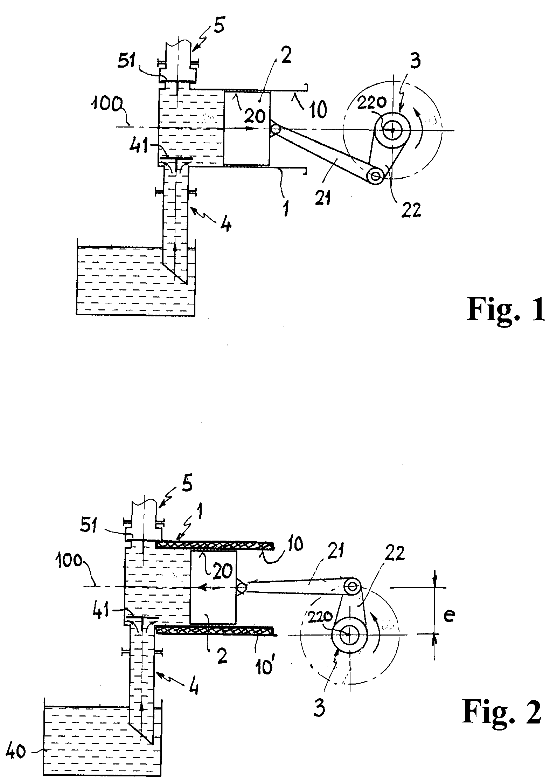

A piston pump according to Figs. 1 and 2 comprises a cylindrical operating chamber 1, in which a piston 2 is inserted with the possibility of oscillating to and fro in the axial direction by simultaneously forming a pre-determined and sealed gap between it and the internal wall 10 of said operating chamber 1, wherein said piston 2 is pivotally interconnected with a crank 21, which is pivotally linked to an eccentric 22, which is driven by means of appropriate driving means 3.

Said operating chamber 1 is on the one hand hydraulically interconnected with the supplying conduit 4 and on the other hand with the discharging i.e. compression conduit 5. Each of said conduits 4, 5 is furnished with a non-return valve 41, 51 which is arranged in the area of supplying the hydraulic liquid into said operating chamber 1 and in the area of discharging thereof, respectively, wherein the non-return valve 41 of the supplying conduit 4 enables the liquid to flow from said supplying conduit 4, e.g. from a reservoir 40 towards said operating chamber 1 but not also in the opposite direction, and wherein the non-return valve 51 of the discharging i.e. compression conduit 5 allows the liquid to flow from the operating chamber 1 into said compression conduit 5 and towards each user of the compressed hydraulic liquid, but not also in the opposite direction.

Regarding the known pump according to Fig. 1, it is adapted to use oil as a hydraulic liquid, in particular a special hydraulic oil, which is normally used in various hydraulic circuits, and said eccentric 22 is arranged in such a manner that its rotation axis 220 is located essentially on the central axis 100 of said operating chamber 1.

Regarding the invented pump according to Fig. 2, the invention provides that environment-friendly water is used as a hydraulic liquid. Contrary to the oil, water is not a lubricant and also cannot protect metallic components against corrosion. Regardless to that, by taking into consideration all prescribed measures, which are defined below, water appears to be a perfect high-pressure hydraulic liquid having a lower compressibility than oil, and kinematic viscosity, which is even less dependent on temperature variations than by oil. Moreover, by taking into consideration basic operational instructions, several further features and phenomena of the water like *pH*, hardness, content of microorganisms and content of air can be easily controlled in practice in such a way that reliable operating of valves and the complete hydraulic systems within the frame of each regular use.

To this aim, on the one hand at least an area of the internal wall 10 of said cylindrical operating chamber 1, which is intended for cooperation with the external surface 20 of the piston 2 and is therefore at least temporarily brought in contact therewith, consists of polyether-ether-ketone (PEEK), and on the other hand, at least an area of the external surface 20 of the piston 2, which is intended for cooperation with said internal wall 10 of the operating chamber 1 and is during oscillations of the piston 2 at least temporarily brought in contact with said internal wall 10 of the operating chamber 1, consists of martensitic stainless steel, which is optionally subjected to thermal treatment by quenching and annealing, and is moreover by optionally plated with chrome, namely galvanized with hard-chrome.

Simultaneously, a driving eccentric 22 of a crank 21, which is intended for providing oscillating movement of the piston 2 to and fro along said operating chamber 1, is located at a pre-determined distance e offset with regard to the longitudinal central axis 100 of said operation chamber 1, so that at least during the critical stage of movement of the piston 2 i.e. during compression of the hydraulic liquid, the crank 21 extends at least approximately along said longitudinal central axis 100 of said operation chamber 1. Thanks to said approach, during such critical phase, where maximum stresses occur due to compressing the hydraulic liquid during displacement of the piston 2 from the right toward the left in accordance with Fig. 2, each transversal forces which are acting to the piston 2 and also the contacting compression between the external surface 20 of the piston 2 and the internal wall 10 of the operating chamber 1 are then essentially reduced.

Such combination of measures, namely said choice of materials of the external surface 20 of the piston 2 and the internal surface 10 of the operating chamber 1 in combination with the above described position of the crank 21 during the stage of critical stresses due to compression of the hydraulic liquid, long-term oscillating of the piston 2 within the operating chamber 1 is feasible without any problems.

In a preferred embodiment of the invention, the operating chamber 1 is surrounded with a bush 10' consisting of PEEK, within which the piston 2 is inserted, which consists of martensitic stainless steel, which is optionally thermal treated by quenching and annealing, and optionally also hard-chrome plated.

The term PEEK is abbreviation of a commonly used English expression "polyether-ether-ketone", which is used to define a plastics, namely a technical plastics i.e. semi-crystallinic thermoplastics having a melting temperature at approx. T=340°C and a glass temperature at approx. T=140°C, and is moreover characterized by low water absorption rate, which is usually approx. 0,1%. The PEEK CA30, which is produced by *QUADRANT*, includes approx. 30% carbon fibers and is commercially available under trademark *Ketron*^{®}.

Due to said carbon fibers, the material becomes more rigid and resilient and herewith also more resistant against wearing and plastic extensions. Due to the presence of said carbon fibers, a thermal conductivity is 3,5-times higher than by pure PEEK, which means that the intensity of heat transfer from the contact surface is 3,5-times higher than in pure PEEK. Consequently, the PEEK with 30% carbon fibers should be preferably used in a pump according to the invention.

The piston 2 of the pump according to the invention preferably consists of martensitic stainless steel AISI440B (DIN X90CrMoV18), which is a martensitic steel with relatively high content of carbon in amount of 0,9%, 18% chrome, 1,1% molybdenum, 0,1% vanadium and max. 1,0% silicium and mangane. Martensitic steel is magnetic, and mechanical properties thereof may still be improved by appropriate thermal treatment, i.e. by quenching and annealing.

In addition to said thermal treatment, the piston may also be chrome plated, wherein the chrome is deposited onto the surface by means of electrolysis. Temperature during such deposition of chrome is approx. 50°C, so that microstructure and dimensions of products may not be changed. Hard-chrome plating is recommended when abrasiveness and mechanical wearing might occur, and where anti-corrosion protection and smoothness of surfaces is required. Thickness of deposited chrome layer can be from 5 micrometers up to 1 mm or even more, and the presence of hard chrome leads to improvement of resistance against wearing, high hardness 64 *HRc* i.e. 1100 *HV*, excellent anti-corrosion protection, chemical resistant surface, resistance against high temperature, law friction coefficient as well as to excellent adhesiveness to materials.

Moreover, additives can also be mixed to pure water as a hydraulic liquid, which are selected from the group consisting of ethanol and ethylene glycol. Whenever the hydraulic apparatus with the integrated pump according to the invention is intended to operate at temperatures below the freezing temperature of water, then a mixture of water and anti-freezing additive is used instead of pure water, wherein said anti-freezing means is selected from the group consisting of e.g. ethanol C₂H₅OH in ethylene glycol C₂H₄(OH)₂.

## Claims

1. High pressure piston pump for generating a required pressure of water as a hydraulic liquid in each high pressure hydraulic circuit in amount between 50 and at least 250 bar, said pump comprising a cylindrical operating chamber (1), in which a piston (2) is inserted in a sealed manner and by maintaining a pre-determined gap against the wall (10) of said operating chamber (1) and also with the possibility of oscillating to and fro in the axial direction, for the purposes of which it is pivotally connected with a crank (21), which is pivotally linked to an eccentric (22) having a rotation axis (220) and is driven by appropriate driving means (3), wherein said operating chamber (1) is hydraulically interconnected on the one hand with a supplying conduit (4) and on the other hand with a discharging i.e. compression conduit (5), and wherein each of said conduits (4, 5) is furnished with a non-return valve (41, 45) located in the area of supplying the hydraulic liquid into said operating chamber (1) or discharging thereof respectively, and wherein the non-return valve (41) of the supplying conduit (4) is intended to allow the hydraulic liquid to flow from said supplying conduit (4) towards the operating chamber (1) but not also in the opposite direction, and wherein the non-return valve (51) of the discharging conduit (5) is intended to allow the hydraulic liquid to flow out from the operating chamber (1) into the discharging conduit (5) but not also in the opposite direction, and wherein on the one hand at least an area of the internal wall (10) of said cylindrical operating chamber (1), which is intended for cooperation with the external surface (20) of the piston (2) and is therefore at least temporarily brought into a direct contact therewith, consists of polyether-ether-ketone, and on the other hand, at least an area of the external surface (20) of the piston (2), which is intended for cooperation with said internal wall (10) of the operating chamber (1) and is during oscillations of the piston (2) at least temporarily brought in contact with said internal wall (10) of the operating chamber (1), consists of martensitic stainless steel, wherein a rotation axis (220) of the driving eccentric (22) of the crank (21), which is intended for providing oscillating movement of the piston (2) to and fro along said operating chamber (1), is located at a pre-determined distance (e) transversally offset with regard to the longitudinal central axis (100) of said operation chamber (1), so that at least during the critical stage of movement of the piston (2) i.e. during compression of the hydraulic liquid when the non-return valve (41)of the supplying conduit (4) is closed and the non-return valve (51) of the discharging conduit (5) is open and the compressed hydraulic liquid is allowed to flow through said discharging conduit (5) towards each disposable users which are integrated in each hydraulic circuit, the crank (21) extends substantially along the longitudinal central axis (100) of the operating chamber (1).

## Patentansprüche

1. Hochdruckkolbenpumpe zum Erzeugen eines erforderlichen Drucks von Wasser als hydraulische Flüssigkeit in jedem Hochdruck-Hydraulikkreislauf in einer Höhe zwischen 50 und mindestens 250 bar, wobei die Pumpe eine zylindrische Betriebskammer (1) aufweist, in die ein Kolben (2) abgedichtet eingerührt wird und durch Einhalten eines vorgegebenen Spalts gegenüber der Wand (10) der Betriebskammer (1) und auch mit der Möglichkeit des Vor- und Zurückschwingens in axialer Richtung, für welche Zwecke er schwenkbar an einer Kurbel (21) befestigt ist, die schwenkbar mit einer Exzenterscheibe (22) mit einer Drehachse (220) verbunden ist und durch geeignete Antriebsmittel (3) angetrieben wird, wobei die Betriebskammer (1) hydraulisch einerseits mit einer Zufuhrleitung (4) und andererseits mit einer Ausfass-, d. h. Kompressionsleitung (5) verbunden ist, und wobei jede dieser Leitungen (4, 5) mit einem Rückschlagventil (41, 45) ausgestattet ist, das im Bereich der Zufuhr der Hydraulikflüssigkeit in die Betriebskammer (1) bzw. an deren Auslass angeordnet ist, und wobei es das Rückschlagventil (41) der Zufuhrleitung (4) ermöglichen soll, dass die Hydraulikflüssigkeit von der Zufuhrleitung (4) zur Betriebskammer (1) fließt, jedoch nicht auch in die entgegengesetzte Richtung, und wobei das Rückschlagventil (51) der Auslassleitung (5) es ermöglichen soll, dass die Hydraulikflüssigkeit aus der Betriebskammer (1) in die Auslassleitung (5) fließt, jedoch nicht auch in die entgegengesetzte Richtung, und wobei einerseits mindestens ein Bereich der Innenwand (10) der zylindrischen Betriebskammer (1), der für das Zusammenwirken mit der Außenfläche (20) des Kolbens (2) gedacht ist und zu diesem Zweck zumindest zeitweise in direkten Kontakt damit gebracht ist, aus Polyether-Ether-Keton besteht, und andererseits mindestens ein Bereich der Außenfläche (20) des Kolbens (2), der für das Zusammenwirken mit der Innenwand (10) der Betriebskammer (1) gedacht ist und während der Oszillationen des Kolben (2) zumindest zeitweise in Kontakt mit der Innenwand (10) der Betriebskammer (1) gebracht ist, aus martensitischem rostfreien Stahl besteht, wobei eine Drehachse (220) der antreibende Exzenterscheibe (22) der Kurbel (21), die zum Vorsehen der oszillierenden Bewegung des Kolbens (2) hin und her entlang der Betriebskammer (1) gedacht ist, in einem vorbestimmten Abstand (*e*) bezüglich der Längsmittelachse (100) der Betriebskammer (1) quer versetzt ist, so dass zumindest während der kritischen Bewegungsphase des Kolbens (2), d. h. während der Kompression der Hydraulikflüssigkeit, wenn das Rückschlagventil (41) der Zuführleitung (4) geschlossen ist und das Rückschlagventil (51) der Auslassleitung (5) offen ist und die komprimierte Hydraulikflüssigkeit durch die Auslassleitung (5) in Richtung jedes beliebigen Verbrauchers, der in jedem Hydraulikkreislauf integriert ist, strömen darf, die Kurbel (21) im Wesentlichen entlang der Längsmittelachse (100) der Betriebskammer (1) verläuft.

## Revendications

1. Pompe à piston haute pression pour engendrer une pression requise d'eau en tant que liquide hydraulique dans chaque circuit hydraulique haute pression dans une quantité comprise entre 50 et au moins 250 bar, ladite pompe comprenant une chambre de fonctionnement cylindrique (1), dans laquelle un piston (2) est inséré d'une manière étanchéifiée et en maintenant un interstice prédéterminé contre la paroi (10) de ladite chambre de fonctionnement (1) et également avec la possibilité d'osciller vers et depuis celle-ci dans la direction axiale, aux fins de quoi il est connecté de manière pivotante à une manivelle (21), qui est reliée de manière pivotante à un excentrique (22) ayant un axe de rotation (220) et est entraînée par des moyens d'entraînement appropriés (3), dans laquelle ladite chambre de fonctionnement (1) est hydrauliquement interconnectée d'une part à un conduit d'apport (4) et d'autre part à un conduit d'évacuation c'est-à-dire de compression (5), et dans laquelle chacun desdits conduits (4, 5) est pourvu d'un clapet anti-retour (41, 45) situé dans la zone d'apport du liquide hydraulique à l'intérieur de ladite chambre de fonctionnement (1) ou d'évacuation de celui-ci respectivement, et dans laquelle le clapet anti-retour (41) du conduit d'apport (4) est destiné à laisser le liquide hydraulique s'écouler depuis ledit conduit d'apport (4) en direction de la chambre de fonctionnement (1) mais non également dans la direction opposée, et dans laquelle le clapet anti-retour (51) du conduit d'évacuation (5) est destiné à laisser le liquide hydraulique s'écouler en dehors de la chambre de fonctionnement (1) à l'intérieur du conduit d'évacuation (5) mais non également dans la direction opposée, et dans laquelle d'une part au moins une zone de la paroi interne (10) de ladite chambre de fonctionnement cylindrique (1), qui est destinée à une coopération avec la surface externe (20) du piston (2) et est par conséquent au moins temporairement amenée en contact direct avec celle-ci, est constituée de polyéther-éther-cétone, et d'autre part, au moins une zone de la surface externe (20) du piston (2), qui est destinée à une coopération avec ladite paroi interne (10) de la chambre de fonctionnement (1) et est durant les oscillations du piston (2) au moins temporairement amenée en contact avec ladite paroi interne (10) de la chambre de fonctionnement (1), est constituée d'acier inoxydable martensitique, dans laquelle un axe de rotation (220) de l'excentrique d'entraînement (22) de la manivelle (21), qui est destiné à fournir un mouvement oscillant du piston (2) vers et depuis celle-ci le long de ladite chambre de fonctionnement (1), est situé à une distance prédéterminée (e) décalée transversalement par rapport à l'axe central longitudinal (100) de ladite chambre de fonctionnement (1), de sorte qu'au moins durant le stade critique de mouvement du piston (2), c'est-à-dire que durant la compression du liquide hydraulique lorsque le clapet anti-retour (41) du conduit d'apport (4) est fermé et le clapet anti-retour (51) du conduit d'évacuation (5) est ouvert et que l'on laisse le liquide hydraulique comprimé s'écouler par l'intermédiaire dudit conduit d'évacuation (5) en direction de chacun des utilisateurs jetables qui sont intégrés dans chaque circuit hydraulique, la manivelle (21) s'étend substantiellement le long de l'axe central longitudinal (100) de la chambre de fonctionnement (1).
